# EUROPEAN PATENT APPLICATION

(11) **EP 3 480 927 A1**
(43) Date of publication of application: **08.05.2019**
(21) Application number: 16907285.7
(22) Date of filing: 30.06.2016
(51) Int. Cl.: H02K 11/25

(54) **STATOR STRUCTURE FOR ROTARY ELECTRIC MACHINE AND INSTALLATION METHOD FOR STATOR STRUCTURE FOR ROTARY ELECTRIC MACHINE**

(71) Applicant: Nissan Motor Co., Ltd., Yokohama-shi, Kanagawa 221-0023 (JP); Renault S.A.S., 92100 Boulogne-Billancourt (FR)
(72) Inventor: MURATA, Koichi, Atsugi-shi Kanagawa 243-0123 (JP); IMAI, Tatsuya, Atsugi-shi Kanagawa 243-0123 (JP); HOSHIKA, Seiji, Atsugi-shi Kanagawa 243-0123 (JP)
(74) Representative: Osha Liang
(86) International application number: PCT/JP2016/069402
(87) International publication number: WO 2018/003052

(57) **Abstract**

A stator structure of a rotary electric machine, comprising: a stator; a motor power distribution component installed in the stator; and a casing that houses the stator and the motor power distribution component, wherein the motor power distribution component has a terminal block inserted into an opening formed in a side wall of the casing, and a lead wire connects a sensor installed in the stator to a connector electrically connecting the sensor to an external component, and the lead wire is inserted into a gap between an edge of the opening and the terminal block.

## Description

### TECHNICAL FIELD

The present invention relates to a stator structure of a rotary electric machine and a method of assembling the stator structure of the rotary electric machine.

### BACKGROUND ART

JP2007-244025A discloses a configuration of transaxle in which a motor generator is housed in a motor casing, a terminal block is disposed in an internal space of the motor casing, an opening is provided in a position facing the terminal block of the motor casing, and three-phase cables are routed between a stator constituting the motor generator and the terminal block. In addition, JP2007-244025A discloses a configuration in which a connector is installed in a through-hole formed in a position different from that of the opening in the motor casing, and a lead wire extending from a thermistor connected to the stator is connected to the connector.

However, in order to miniaturize the motor casing using the transaxle disclosed in JP2007-244025A, it is necessary to provide a through-hole separately from the opening. Therefore, it is difficult to miniaturize the motor casing in the axial direction.

### SUMMARY OF INVENTION

The object of the invention is to provide a stator structure of a rotary electric machine that enables miniaturizing the motor casing in the axial direction, and a method of assembling the stator structure of the rotary electric machine.

A stator structure of a rotary electric machine according to one embodiment of the present invention is a stator structure of a rotary electric machine, comprising: a stator; a motor power distribution component installed in the stator; and a casing that houses the stator and the motor power distribution component, wherein the motor power distribution component has a terminal block inserted into an opening formed in a side wall of the casing, and a lead wire connects a sensor installed in the stator to a connector electrically connecting the sensor to an external component, and the lead wire is inserted into a gap between an edge of the opening and the terminal block.

### BRIEF DESCRIPTION OF DRAWINGS

FIG. 1 is a cross-sectional view illustrating a principal configuration of a stator structure of a rotary electric machine according to a first embodiment;
FIG. 2 is a top plan view illustrating a principal configuration of the stator structure of the rotary electric machine according to the first embodiment;
FIG. 3 is a side view illustrating a terminal block of a bus ring included in the stator structure of the rotary electric machine according to the first embodiment (when a connector is temporarily attached);
FIG. 4 is a side view illustrating the terminal block of the bus ring included in the stator structure of the rotary electric machine according to the first embodiment (after the connector is removed);
FIG. 5 is a bottom view illustrating the terminal block of the bus ring included in the stator structure of the rotary electric machine according to the first embodiment (when the connector is temporarily attached);
FIG. 6 is a bottom view illustrating the terminal block of the bus ring included in the stator structure of the rotary electric machine according to the first embodiment (after the connector is removed);
FIG. 7 is a flowchart illustrating a process of assembling the rotary electric machine according to the first embodiment;
FIG. 8 is a schematic diagram illustrating a process of assembling the stator structure of the rotary electric machine according to the first embodiment (temporary attachment of a thermistor to the bus ring);
FIG. 9 is a schematic diagram illustrating a process of assembling the stator structure of the rotary electric machine according to the first embodiment (when the terminal block is inserted into an opening);
FIG. 10 is a schematic diagram illustrating a process of assembling the stator structure of the rotary electric machine according to the first embodiment (connection of the bus ring to a casing);
FIG. 11 is a schematic diagram illustrating a process of assembling the stator structure of the rotary electric machine according to the first embodiment (installation of a thermistor holder in the bus ring);
FIG. 12A is a schematic diagram illustrating a stator structure of a rotary electric machine according to a second embodiment;
FIG. 12B is a schematic diagram illustrating a stator structure of a rotary electric machine according to a second embodiment;
FIG. 13 is a schematic diagram illustrating a stator structure of a rotary electric machine according to a third embodiment;
FIG. 14 is a schematic diagram illustrating a stator structure of a rotary electric machine according to a fourth embodiment; and
FIG. 15 is a schematic diagram illustrating a stator structure of a rotary electric machine according to a fifth embodiment.

### DESCRIPTION OF EMBODIMENTS

Hereinafter, embodiments of the present invention will be described with reference to the accompanying drawings.

### <Configuration of First Embodiment

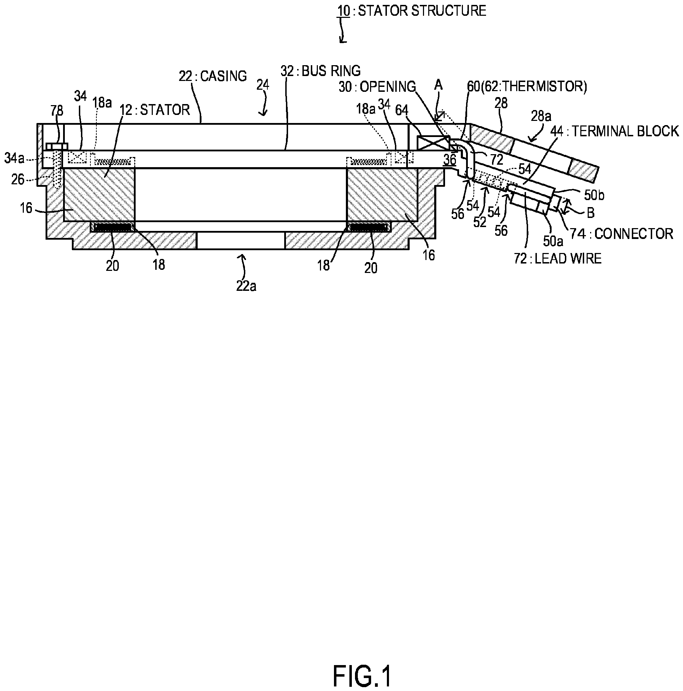

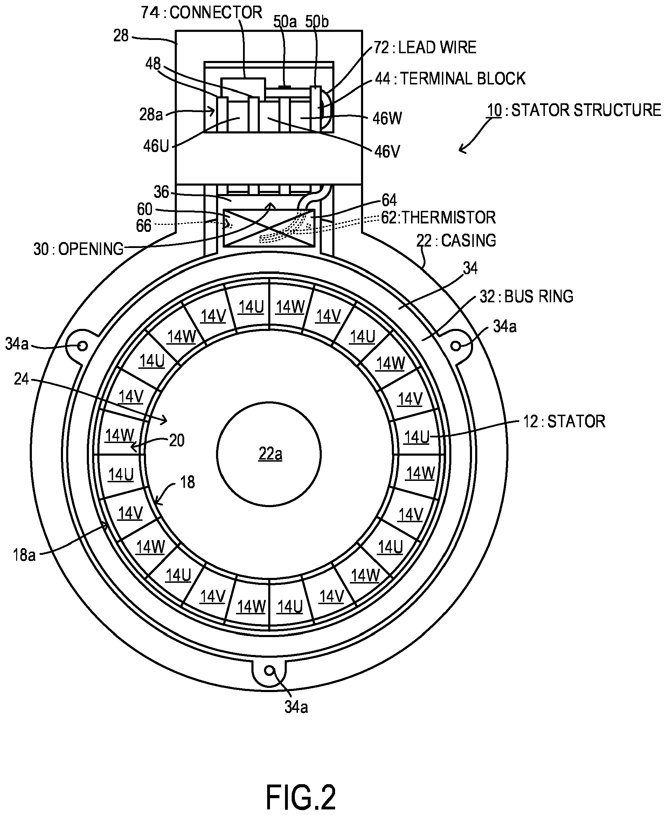

FIGS. 1 and 2 are a cross-sectional view and a top plan view, respectively, illustrating a principal configuration of a stator structure of a rotary electric machine according to a first embodiment. The stator structure 10 of the rotary electric machine according to the first embodiment includes a stator 12 included in a motor, a casing 22 that houses the stator 12, a bus ring 32 installed in the stator, and a thermistor unit 60 (temperature sensor) temporarily attached to the bus ring 32.

The stator 12 has a ring shape as seen in a top plan view and has a plurality of (U-phase, V-phase, and W-phase) coils arranged along a circumferential direction at equal intervals. The coil has an iron core 16, an insulator 18 that covers the iron core 16, and a coil winding 20 wound around the iron core 16 (insulator 18). An outer periphery of the insulator 18 serves as a bobbin 18a. According to the first embodiment, twenty four coils including U-phase coils 14U, V-phase coils 14V, and W-phase coils 14W are arranged alternately side by side along the circumferential direction. Note that, although not shown in the drawing, a rotor (not shown) is provided inside (center portion) of the stator 12 coaxially with the stator 12 by interposing a predetermined air gap.

The casing 22 houses at least the stator 12, the rotor (not shown), and the bus ring 32 from an access port 24 (opening) provided on top of the casing 22 and has an internal space following the contour of the stator 12 and formed coaxially with the stator 12 and the rotor (not shown). An insertion hole 22a for inserting the rotor (not shown) is formed on the bottom of the casing 22. In addition, a bolt hole 26 (female threaded) to which a bolt 78 (not shown in FIG. 2) is fastened for installing the bus ring 32 is formed on the inner wall of the casing 22.

An external terminal holder 28 extends from an upper end of a side wall of the casing 22 in a radial direction (horizontal direction). The external terminal holder 28 extends in the radial direction, and extends so as to be bent obliquely downward as shown in FIG. 1 from the middle thereof. In addition, an insertion hole 28a through which an external terminal (not shown) is inserted into the sloped portion is formed.

An opening 30 is formed in an upper part of the side wall of the casing 22 directly under the external terminal holder 28. A terminal block 44 of the bus ring 32 is inserted into the opening 30. Note that a lid portion (not shown) may be installed on the top of the casing 22 to seal the access port 24.

The bus ring 32 is assembled with the casing 22 and the stator 12. The bus ring 32 has a ring-shaped main body 34 provided with a trench for storing cables and a terminal block 44 extending from the main body 34. A part of the main body 34 where the terminal block 44 extends, serves as a connecting portion 36. The main body 34 houses a U-phase cable (not shown), a V-phase cable (not shown), a W-phase cable (not shown), and an N-phase cable (not shown). The terminal block 44 has a U-phase electrode 46U, a V-phase electrode 46V, and a W-phase electrode 46W (FIG. 2). The U-phase cable (not shown) is connected to the U-phase electrode 46U. The V-phase cable (not shown) is connected to the V-phase electrode 46V. The W-phase cable (not shown) is connected to the W-phase electrode 46W. An external terminal (not shown) is connected to the U-phase electrode 46U, the V-phase electrode 46V, and the W-phase electrode 46W. The external terminal (not shown) is inserted into the insertion hole 28a and is fixed to and supported by the external terminal holder 28.

According to this embodiment, eight U-phase coils 14U, eight V-phase coils 14V, and eight W-phase coils 14W are arranged. Therefore, eight U-phase cables (not shown) are connected to the U-phase electrode 46U in parallel, eight V-phase cables (not shown) are connected to the V-phase electrode 46V in parallel, and eight W-phase cables (not shown) are connected to the W-phase electrode 46W in parallel.

The N-phase cable (not shown) serves as a connecting neutral line within a range of the neighboring three coils including the U-phase coil 14U, the V-phase coil 14V, and the W-phase coil 14W. In this manner, the N-phase cable (not shown) may have a connection configuration in which it is divided into eight pieces along a circumferential direction of the main body 34 or may have a connection configuration in which a single N-phase cable (not shown) turns around the entire main body 34.

According to the first embodiment, the U-phase coil 14U is connected to the U-phase electrode 46U through the U-phase cable (not shown). The V-phase coil 14V is connected to the V-phase electrode 46V through the V-phase cable (not shown). The W-phase coil 14W is connected to the W-phase electrode 46W through the W-phase cable (not shown). Note that a plurality of insertion holes 34a are provided on the outer circumference of the main body 34. The insertion holes 34a communicate with the bolt holes 26 formed on the casing 22 when the bus ring 32 is installed in the casing 22.

As illustrated in FIG. 1, the terminal block 44 extends obliquely downward from the connecting portion 36. The terminal block 44 is placed nearly in parallel to the sloped portion of the external terminal holder 28 when the bus ring 32 is installed in the casing 22. The U-phase electrode 46U, the V-phase electrode 46V, and the W-phase electrode 46W are arranged on an upper surface of the terminal block 44 to face the insertion hole 28a of the external terminal holder 28, respectably.

The thermistor unit 60 is temporarily attached to the bus ring 32. The thermistor unit 60 is used to measure a temperature of the coil winding 20 wound around the stator 12. The thermistor unit 60 has a thermistor holder 64 that holds a thermistor 62 (sensor), a lead wire 72 connected to the thermistor 62, and a connector 74 connected to the lead wire 72. Note that the length and the diameter of the lead wire 72 may be optionally designed.

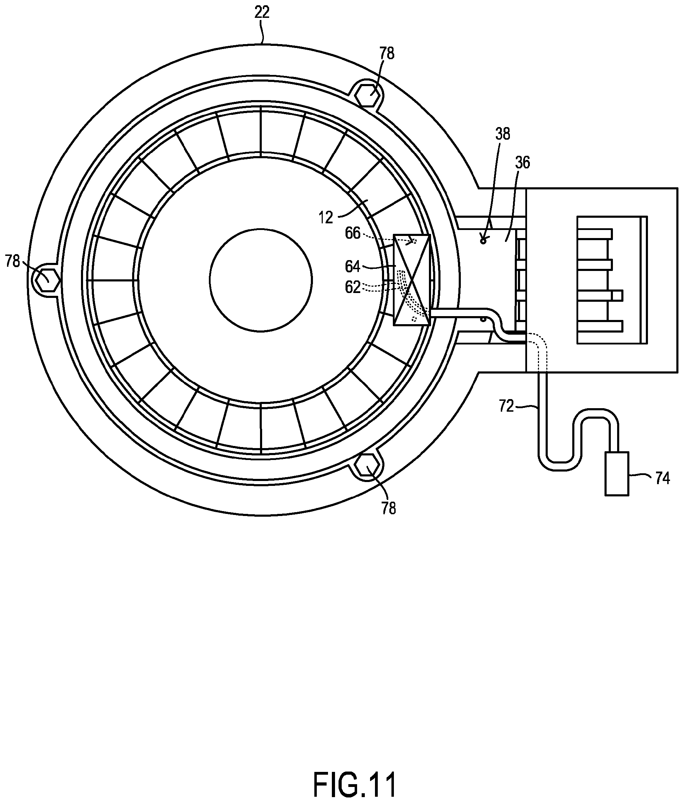

In order to temporarily attach the thermistor unit 60, the terminal block 44 has a temporary attaching portion 48 where the connector 74 can be temporarily attached and a storing portion 52 for storing the lead wire 72. In addition, the connecting portion 36 and the thermistor holder 64 are provided with a configuration for temporarily attaching the thermistor holder 64. For example, the connecting portion 36 has a joggle 38 (see FIG. 11), and the thermistor holder 64 has a joggle hole 66 where the joggle 38 is fitted (see FIG. 11). Alternatively, the thermistor holder 64 may be temporarily attached by tight fitting. The temporary attaching portion of the thermistor holder 64 may be placed in any position of the bus ring 32 as long as the thermistor holder 64 is disposed at a position inside the opening 30 when the bus ring 32 is installed in the casing 22. Note that the thermistor holder 64 has a configuration for installing the thermistor holder 64 in the stator 12 (to press the thermistor 62 to the coil winding 20). For example, the thermistor holder 64 has a member engaged with the bobbin 18a, so that the thermistor holder 64 presses the thermistor 62 to the coil winding 20 as the thermistor holder 64 is engaged with the bobbin 18a.

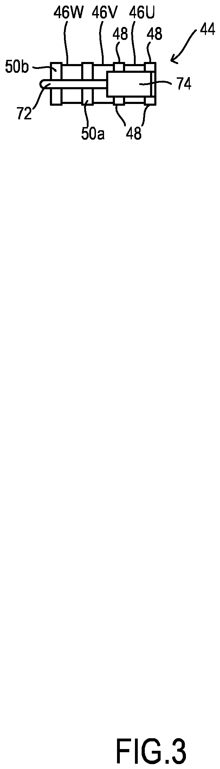

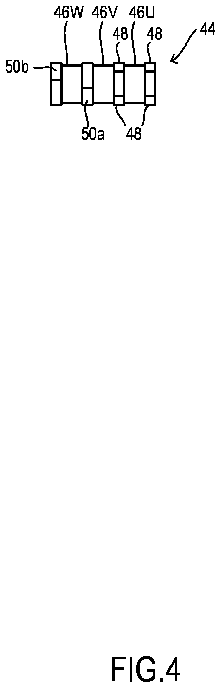

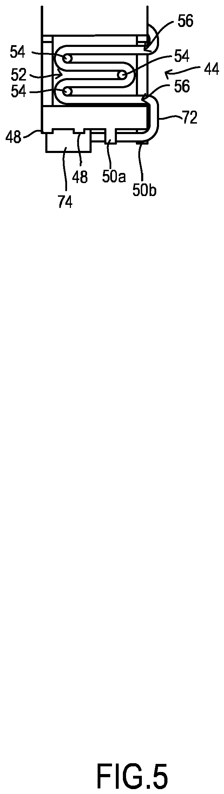

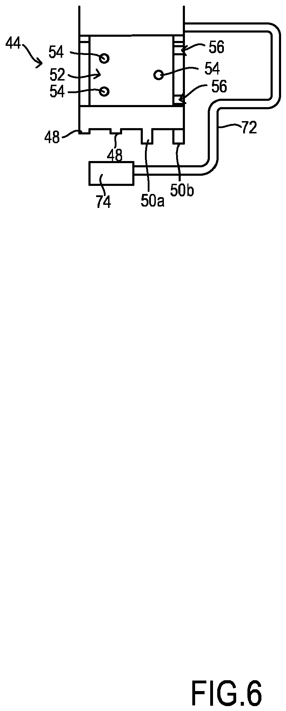

FIGS. 3 and 4 are side views illustrating the terminal block of the bus ring of the stator structure of the rotary electric machine according to the first embodiment (when the connector is temporarily attached and after the connector is removed). In addition, FIGS. 5 and 6 are bottom views illustrating the terminal block of the bus ring of the stator structure of the rotary electric machine according to the first embodiment (when the connector is temporarily attached and after the connector is removed).

As illustrated in FIGS. 3 and 4, the temporary attaching portion 48 is arranged on a side surface of the terminal block 44 placed to face an insertion direction to the opening 30 when the bus ring 32 is installed. The temporary attaching portion 48 has a gap slightly smaller than the thickness (width) of the connector 74, and the connector 74 is fitted to this gap. In addition, hook portions 50a and 50b for hooking the lead wire 72 (or a tube for protecting the lead wire 72 as described below) in the vicinity of the connector 74 from the vertical direction are provided on the side surface of the terminal block 44 where the temporary attaching portion 48 is provided. The hook portion 50a is placed to support the lead wire 72 from the bottom, and the hook portion 50b is placed to support the lead wire 72 from the top. As illustrated in FIGS. 3 and 4, when the side surface of the terminal block 44 is seen in a top plan view, a distance between the upper end of the hook portion 50a and the lower end of the hook portion 50b is designed to be slightly smaller than the diameter of the lead wire 72. As a result, the hook portions 50a and 50b can support the lead wire 72 by tight fitting. Since the lead wire 72 is supported by the hook portions 50a and 50b, it is possible to prevent the connector 74 from being unintentionally removed from the temporary attaching portion 48.

As illustrated in FIGS. 5 and 6, the storing portion 52 is a hollow portion formed in the lower part of the terminal block 44 and opened downward. The side wall of the width direction of the storing portion 52 is provided with notches 56 opened downward. The notch 56 has a width designed to be slightly smaller than the diameter of the lead wire 72 (or a tube for protecting the lead wire 72 as described below). As a result, the lead wire 72 can be fitted to and held by the notches 56.

In the storing portion 52, a winding portion 54 where the lead wire 72 (or a tube for protecting the lead wire 72 as described below) is wound is provided in a position corresponding to the bottom surface of the hollowed portion. For example, the winding portion 54 has a circular columnar shape having a side surface where the lead wire 72 may be wound (for example, by a half turn). In addition, a plurality of winding portions 54 are provided depending on a length of the lead wire 72 stored in the storing portion 52. In FIG. 5, the lead wire 72 is wound around the winding portion 54 in one and a half amplitude aspect in a width direction of the storing portion 52. Alternatively, the number of winding portions 54 and the winding pattern may be optionally designed. In addition, a pair of notches 56 is provided on the same side wall of the width direction where the storing portion 52 is formed. Alternatively, one of the notches 56 may be formed on one of the side walls, and the other notch 56 may be formed on the other side wall. As illustrated in FIGS. 4 and 6, as the connector 74 is removed from the temporary attaching portion 48, the lead wire 72 is released from the hook portions 50a and 50b, the notches 56, and the winding portions 54.

As illustrated in FIGS. 1 and 2, the opening 30 is formed to be slightly larger than a dimension of the cross-sectional direction of the terminal block 44 (as the terminal block 44 is seen in the direction illustrated in FIGS. 3 and 4, that is, an insertion direction of the terminal block 44 to the opening 30). In addition, the storing portion 52 is designed to be placed inside the side surface of the terminal block 44 as the terminal block 44 is seen from the cross-sectional direction of the terminal block 44. The connector 74 is temporarily attached to be placed inside the side surface of the terminal block 44. Therefore, the connector 74 and the storing portion 52 do not interfere with the opening 30 when the terminal block 44 is inserted into the opening 30.

As illustrated in FIG. 1, after the bus ring 32 is installed, a gap A between an edge of the opening 30 and the terminal block 44 becomes narrower than the thickness B of the connector 74 (or the smallest one of the thickness, the width, and the depth). However, the lead wire 72 is inserted into this gap A. Therefore, according to the first embodiment, it is not necessary to design a dimension of the opening 30 such that a gap is formed as large as the connector 74 can be inserted after the bus ring 32 is installed. Accordingly, it is possible to reduce the opening 30, that is, a dimension of the casing 22 in the axial direction.

The bus ring 32 is formed of an insulating material such as resin. However, at least a portion abutting on the lead wire 72 (or a tube described below) is preferably subjected to surface treatment to facilitate sliding of the lead wire 72 at a certain level, so that the lead wire 72 can be easily removed from the terminal block 44 when the connector 74 is removed.

### <Assembling Process of First Embodiment

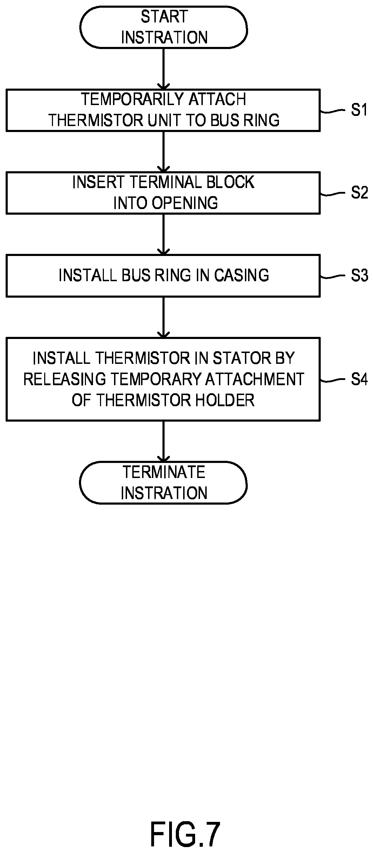

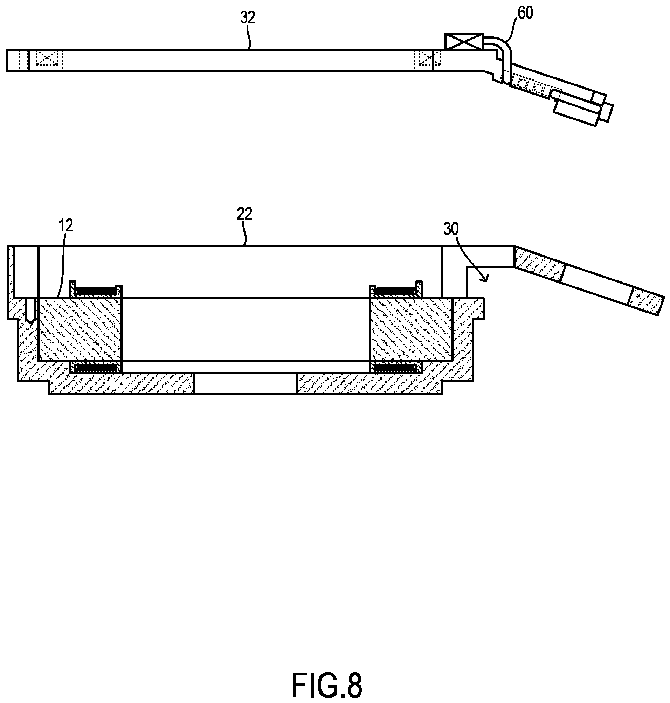

FIG. 7 is a flowchart illustrating a process of assembling the stator structure of the rotary electric machine according to the first embodiment. FIGS. 8 to 11 are schematic diagrams illustrating a process of assembling the rotary electric machine according to the first embodiment. In step S1 (FIG. 7), the stator 12 is installed in the casing 22, and the thermistor unit 60 is temporarily attached to the bus ring 32 (FIG. 8).

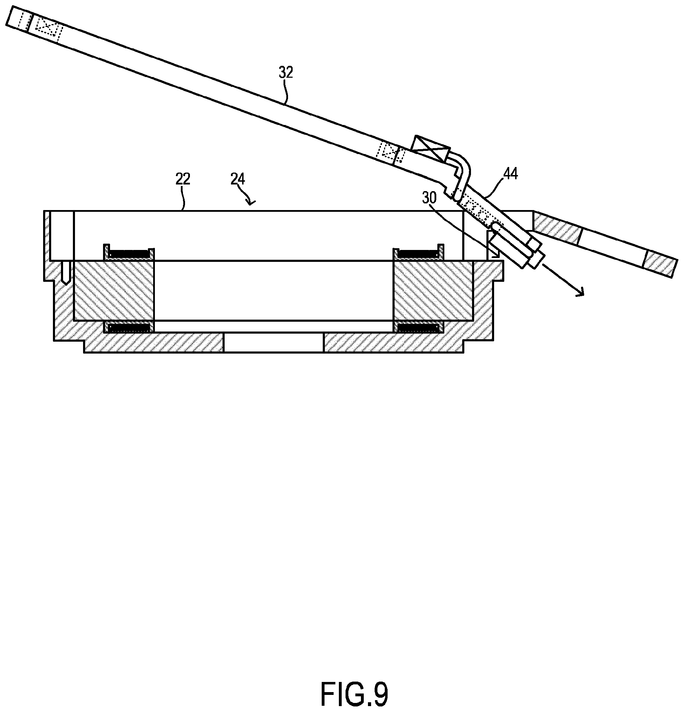

In step S2 (FIG. 7), the terminal block 44 of the bus ring 32 having the thermistor unit 60 temporarily attached is introduced from the access port 24, and the terminal block 44 is inserted into the opening 30 from the arrow direction in the drawing (FIG. 9).

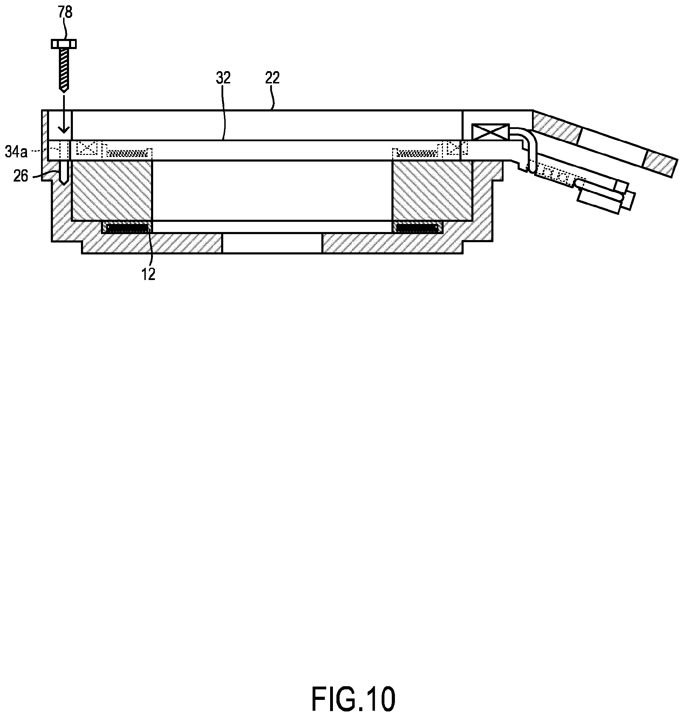

In step S3 (FIG. 7), the entire bus ring 32 is introduced from the access port 24 and is installed in the casing 22 and the stator 12 (FIG. 10). The bus ring 32 is installed in the casing 22 by inserting bolts 78 to the insertion holes 34a provided in the bus ring 32 and fastening the bolts 78 to the bolt holes 26. The bus ring 32 is installed in the stator 12 by nipping an end of the U-phase cable (not shown) installed in the bus ring 32, an end of the V-phase cable (not shown), an end of the W-phase cable (not shown), and an end of the N-phase cable (not shown) to an end of the coil winding 20 installed in the stator 12 and melting and press-fitting them.

In step S4 (FIG. 7), the thermistor holder 64 is installed in the stator 12 (motor) by releasing the temporary attachment of the thermistor holder 64, so that the process of installing the bus ring 32 is terminated (FIG. 11). After the bus ring 32 is installed, the temporary attachment of the connector 74 may be released, and the connector 74 may be connected to a vehicle side.

### <Effects of First Embodiment>

In the stator structure 10 of the rotary electric machine according to the first embodiment, the lead wire 72 that connects the thermistor 62 (sensor) installed in the stator 12 and the connector 74 that electrically connects the thermistor 62 to an external component to each other is inserted into a gap between the edge of the opening 30 and the terminal block 44. As a result, it is not necessary to form the insertion hole for inserting the connector 74 to the casing 22 separately from the opening 30. Accordingly, it is possible to miniaturize the casing 22 (motor) in the axial direction.

The gap between the edge of the opening 30 and the terminal block 44 is smaller than the dimension of the connector 74. As a result, the connector 74 is not erroneously inserted from the opening 30 to the casing 22 after installation. In addition, since the size of the opening 30 is set such that the terminal block 44 can be inserted, it is possible to miniaturize the casing 32 in the axial direction.

The bus ring 32 (power distribution component of the motor) has a main body 34 installed in the stator 12 and a terminal block 44 extending from the main body 34. The thermistor 62 is temporarily attached to the main body 34. The connector 74 is temporarily attached to the terminal block 44 and is formed insertable into the opening 30 along with the terminal block 44.

That is, according to this embodiment, there is provided a method of assembling a stator structure 10 of a rotary electric machine by installing a bus ring 32 and a thermistor 62 in a stator 12 housed in a casing 22 and inserting a terminal block 44 of the bus ring 32 into an opening 30 formed on a side wall of the casing 22, the method including: temporarily attaching the thermistor 62 to the bus ring 32 and temporarily attaching a connector 74 connected to the thermistor 62 through a lead wire 72 to a side surface facing an insertion direction of the terminal block 44 to the opening 30 (step S1); inserting the connector 74 to the opening 30 along with the terminal block 44 when the bus ring 32 is installed in the stator 12 (step S2); and installing the thermistor 62 in the stator 12 by releasing the temporary attachment of the thermistor 62 (step S4).

As a result, an operation of inserting the terminal block 44 into the opening 30 and an operation of inserting the connector 74 to the opening 30 can be performed simultaneously. Therefore, it is possible to improve work efficiency. In addition, since a plurality of sensors such as the thermistor 62 may be installed in the bus ring 32, a plurality of wiring works can be performed using a single opening 30. Furthermore, since a special tool is not necessary to insert the lead wire 72 and the connector 74 to the opening 30, it is possible to easily perform the work. Note that, although the thermistor 62 is temporarily attached to the bus ring 32 in this embodiment, the thermistor 62 may be temporarily attached to a member other than the bus ring 32. That is, similar to the case of the bus ring 32, the thermistor 62 may be temporarily attached to a member inserted into the opening 30 or an opening other than the opening 30 in the casing 22 when it is installed in the stator 12 or the casing 22.

The temporary attaching portion 48 for temporarily attaching the connector 74 is provided on the side surface facing the insertion direction of the terminal block 44 to the opening 30. As a result, it is possible to insert the connector 74 to the opening 30 without interfering with surroundings of the opening 30 of the casing 22.

The terminal block 44 has a storing portion 52 for storing the lead wire 72. As a result, it is possible to prevent the lead wire 72 from abutting on an edge of the opening 30 or the like and being damaged when the terminal block 44 is inserted into the opening 30.

A notch 56 for fitting the lead wire 72 is formed on the side wall of the storing portion 52. As a result, it is possible to prevent the lead wire 72 from being unintentionally removed from the storing portion 52.

The winding portion 54 where the lead wire 72 is wound is provided inside the storing portion 52. As a result, it is possible to reliably store an excessive length of the lead wire 72 in the storing portion 52 and prevent the lead wire 72 from being caught by other parts or being damaged. Therefore, it is possible to improve work efficiency.

The thermistor 62 is used as a temperature sensor. As a result, it is possible to obtain a motor capable of managing temperature.

Comparing the casing 22 of the stator structure of the rotary electric machine according to the first embodiment with a casing having a connector-dedicated insertion hole, both of the motors have the casings which expose the terminal block 44. In a case where the connector-dedicated insertion hole is provided in the casing 22, it is difficult to form the insertion hole in the same position of the axial direction as that of the opening 30, but different in the circumferential direction, due to a problem such as interference with the bus ring 32. Therefore, it is necessary to form the connector-dedicated insertion hole in a position of the axial direction of the casing 22 different from that of the opening 30. For this reason, it was necessary to obtain an axial length of the casing 22 as long as the diameter of this insertion hole. However, according to the present invention, the lead wire 72 connected to the connector 74 is inserted into a gap between the edge of the opening 30 used to insert the terminal block 44 and the terminal block 44. Therefore, it is not necessary to form the connector-dedicated insertion hole. Accordingly, it is possible to reduce the axial dimension of the casing 22.

### <Second Embodiment>

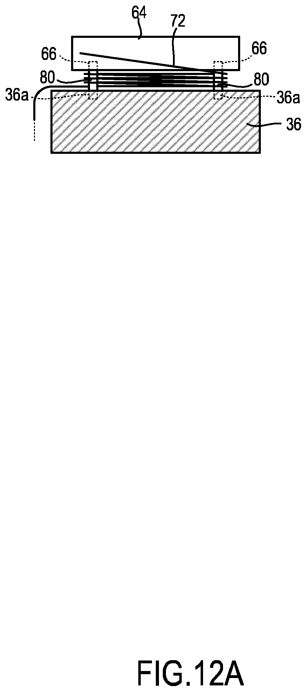

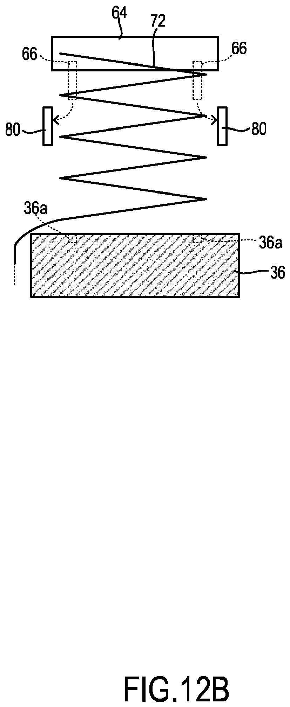

FIG.12A and FIG.12B are schematic diagrams illustrating a stator structure of a rotary electric machine according to a second embodiment. FIG. 12A is a schematic diagram illustrating temporary attachment of the thermistor unit, FIG. 12B is a schematic diagram illustrating releasing of the temporary attachment of the thermistor unit. Note that, in the following description, the same reference numerals are given to the elements common with the first embodiment, and the explanation thereof will be omitted unless necessary. The second embodiment may be suitable for a case where the installation position of the thermistor unit 60 is far from the opening 30, and it is necessary to increase the length of the lead wire 72 disposed inside the casing 22 (see FIG. 1 and the like). As a result, it is possible to prevent degradation of work efficiency that may be caused when handling becomes complicated due to chaotic entanglement of the lead wire 72 at the time of installation of the bus ring 32.

According to the second embodiment, the thermistor holder 64 that holds the thermistor 62 (sensor) has a second winding portion 80 (joggle) where the lead wire 72 is wound. In addition, the thermistor holder 64 has a joggle hole 66 to which an upper portion of the second winding portion 80 is fitted. Meanwhile, the connecting portion 36 has a support portion 36a (joggle hole) for temporarily attaching the thermistor holder 64 when a lower portion of the second winding portion 80 is supported (fitted). Similar to the winding portion 54, the second winding portion 80 has a circular columnar shape, and the lead wire 72 is wound around the second winding portion 80. However, the lead wire 72 may be wound around the second winding portion 80 several times depending on the length of the lead wire 72.

Here, a fitting strength for fitting the second winding portion 80 to the joggle hole 66 may be set to be higher than a fitting strength for fitting the second winding portion 80 to the support portion 36a. In this case, as illustrated in FIG.12B, as the thermistor holder 64 is separated from the connecting portion 36, the second winding portion 80 is separated from the connecting portion 36 and is still fitted to the thermistor holder 64 side, so that the lead wire 72 is easily separated from the second winding portion 80. Then, the second winding portion 80 may be removed from the thermistor holder 64 at the time of installation of the thermistor holder 64 to prevent interference. Reversely, the fitting strength for fitting the second winding portion 80 to the support portion 36a may be set to be higher than the fitting strength for fitting the second winding portion 80 to the joggle hole 66. In this case, as the thermistor holder 64 is separated from the connecting portion 36, the second winding portion 80 is separated from the thermistor holder 64 and is fitted to the support portion 36a, so that the lead wire 72 is easily separated from the second winding portion 80. Then, the second winding portion 80 may be removed from the connecting portion 36 or may be continuously fitted to the connecting portion 36. In addition, the second embodiment may similarly apply to third and fourth embodiments described below.

### <Third Embodiment>

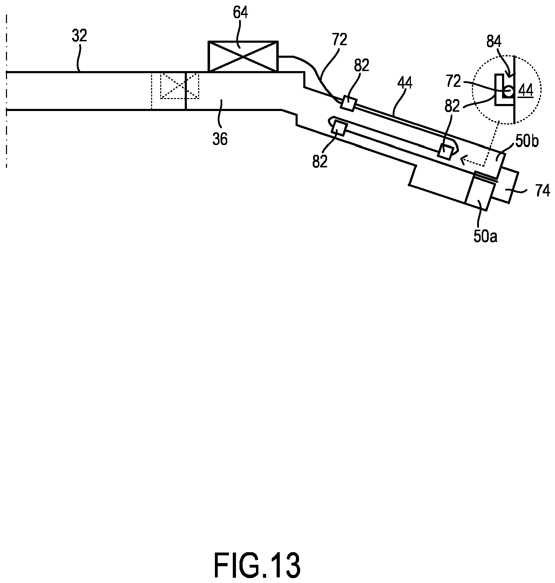

FIG. 13 is a schematic diagram illustrating a stator structure of a rotary electric machine according to a third embodiment. In the stator structure of the rotary electric machine according to the third embodiment, the storing portion 52 and the winding portion 54 are omitted, and the lead wire 72 is fitted to the fitting portion 82. The fitting portion 82 is installed on a side surface of the width direction of the terminal block 44 or a bottom surface and has an L-shaped cross-sectional shape so as to interpose the lead wire 72 along with the terminal block 44. In addition, a gap between the fitting portion 82 and the terminal block 44 is designed to be slightly smaller than the diameter of the lead wire 72 (a tube described below), so that the lead wire 72 is fitted to the gap from the opening 84 of the fitting portion 82. Note that, although a plurality of fitting portions 82 are installed in the terminal block 44 here, it is preferable that the openings 84 be oriented in the same direction as shown in the view of the arrow in FIG. 13. As a result, the lead wire 72 can be separated from all of the fitting portions 82 just by pulling the lead wire 72 along the direction of the openings 84. Using such fitting portions 82, it is possible to prevent the lead wire 72 from being unintentionally removed at the time of temporary attachment.

### <Fourth Embodiment>

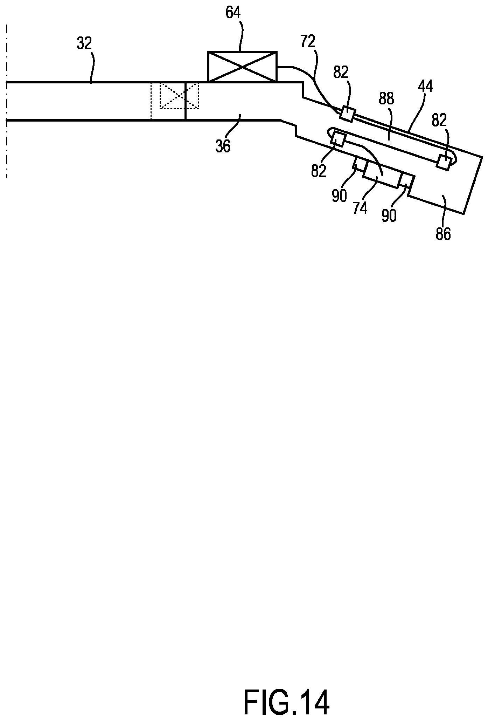

FIG. 14 is a schematic diagram illustrating a stator structure of a rotary electric machine according to a fourth embodiment. In the assembling structure according to the fourth embodiment, the connector 74 of the third embodiment is temporarily attached to the lower part of the terminal block 44. That is, the terminal block 44 has a thick portion 86 forming a tip portion of the terminal block 44, a thin portion 88 that forms a basal part of the terminal block 44 and forms a step portion having a thickness difference from the thick portion 86, and a temporary attaching portion 90 provided in the step portion of the thin portion 88 to temporarily attach the connector 74.

Similar to the temporary attaching portion 48 of the first embodiment, the temporary attaching portion 90 forms a gap slightly narrower than the thickness (width) of the connector 74 so as the connector 74 is nipped to this gap. Here, a thickness difference between the thick portion 86 and the thin portion 88 is preferably designed to be equal to or larger than the width (thickness) of the connector 74. In this configuration, it is possible to avoid the connector 74 from being damaged by abutting on the edge of the opening 30 when the terminal block 44 is inserted into the opening 30. Note that, although the fitting portion 82 of the third embodiment is used to hold the lead wire 72 in FIG. 14, the storing portion 52, the winding portion 54, and the notch 56 of the first embodiment may also be provided in the step portion of the thin portion 88.

### <Fifth Embodiment>

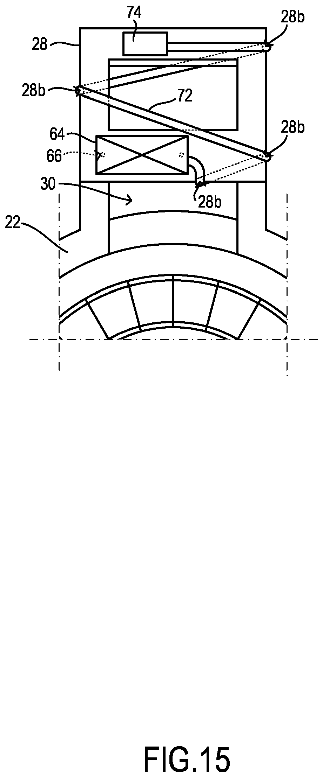

FIG. 15 is a schematic diagram illustrating a stator structure of a rotary electric machine according to a fifth embodiment. In the stator structure of the rotary electric machine according to the fifth embodiment, the thermistor holder 64 and the connector 74 are temporarily attached to the casing 22. Meanwhile, although being not shown, a configuration of the bus ring 32 for temporarily attaching the thermistor holder 64, the connector 74, and the lead wire 72 is not illustrated. For example, the thermistor holder 64 is temporarily attached by fitting the joggle hole 66 to the joggle (not shown) formed in the external terminal holder 28, and the connector 74 is temporarily attached by fitting the joggle hole (not shown) of the connector 74 to the joggle (not shown) of the external terminal holder 28. In addition, while the lead wire 72 is inserted into the opening 30, it is wound around the external terminal holder 28 and is fitted to the notch 28b formed on the side surface of the external terminal holder 28 (and the side surface facing the opening). The notch 28b has a width slightly smaller than the diameter of the lead wire 72 (or the tube described below).

In the first to fourth embodiments, the lead wire 72 is inserted into the opening 30 when the terminal block 44 (see FIG. 1 or the like) is inserted in the opening 30 along the opening 30. However, according to the fifth embodiment, the lead wire 72 is already inserted into the opening 30 before the terminal block 44 is inserted into the opening 30. In addition, the thermistor holder 64 may be installed in the stator 12 by releasing the temporary attachment of the thermistor holder 64 and the lead wire 72 after the bus ring 32 is installed in the casing 22. According to the fifth embodiment, since it is unnecessary to provide a configuration for temporarily attaching the thermistor holder 64, the connector 74, and the lead wire 72 to the bus ring 32, the cost can be suppressed correspondingly.

Note that the lead wire 72 may be covered by a tube formed of an elastic member (for example, rubber materials such as natural rubber or silicon rubber). A diameter of the tube may be optionally designed. By covering the lead wire 72 with the tube in this manner, it is possible to easily release temporary attachment of the lead wire 72 by virtue of a restoring force of the tube when the temporary attachment of the lead wire 72 is released. This tube may apply to any one of the aforementioned embodiments.

While the embodiments of the invention have been described hereinbefore, they are merely a part of applications of the invention for illustrative purposes and are not intended to limit the technical scope of the invention to such specific configurations of the embodiments.

## Claims

1. A stator structure of a rotary electric machine, comprising:
a stator;
a motor power distribution component installed in the stator; and
a casing that houses the stator and the motor power distribution component,
wherein the motor power distribution component has a terminal block inserted into an opening formed in a side wall of the casing, and
a lead wire connects a sensor installed in the stator to a connector electrically connecting the sensor to an external component, and the lead wire is inserted into a gap between an edge of the opening and the terminal block.

2. The stator structure of the rotary electric machine according to claim 1, wherein the gap between the edge of the opening and the terminal block is narrower than a dimension of the connector.

3. The stator structure of the rotary electric machine according to claim 1 or 2, wherein the motor power distribution component has a main body installed in the stator and the terminal block extending from the main body,
the sensor is temporarily attached to the main body, and
the connector is temporarily attached to the terminal block and is insertable into the opening along with the terminal block.

4. The stator structure of the rotary electric machine according to claim 3, wherein a temporary attaching portion for temporarily attaching the connector is provided on a side surface facing an insertion direction of the terminal block to the opening.

5. The stator structure of the rotary electric machine according to claim 3, wherein the terminal block has a thick portion forming a tip portion of the terminal block, a thin portion that forms a basal part of the terminal block and forms a step portion having a thickness difference from the thick portion, and a temporary attaching portion provided in the step portion of the thin portion to temporarily attach the connector.

6. The stator structure of the rotary electric machine according to any one of claims 3 to 5, wherein the terminal block has a storing portion for storing the lead wire.

7. The stator structure of the rotary electric machine according to claim 6, wherein a notch for fitting the lead wire is formed on a side wall of the storing portion.

8. The stator structure of the rotary electric machine according to claim 6 or 7, wherein a winding portion around which the lead wire is wound is provided in the storing portion.

9. The stator structure of the rotary electric machine according to any one of claims 3 to 5, wherein a fitting portion is provided on a side surface or a bottom surface of the terminal block to fit the lead wire along with the terminal block.

10. The stator structure of the rotary electric machine according to any one of claims 3 to 9, wherein the sensor has a second winding portion around which the lead wire is wound, and
the main body has a support portion that supports the second winding portion to temporarily attach the sensor.

11. The stator structure of the rotary electric machine according to claim 1 or 2, wherein the sensor and the connector are temporarily attached to the casing.

12. The stator structure of the rotary electric machine according to any one of claims 3 to 11, wherein the lead wire is covered by an elastic tube.

13. The stator structure of the rotary electric machine according to any one of claims 1 to 12, wherein the sensor is a temperature sensor.

14. A method of assembling a stator structure of a rotary electric machine by installing a motor power distribution component and a sensor in a stator housed in a casing and inserting a terminal block constituting the motor power distribution component into an opening formed on a side wall of the casing, the method comprising:
temporarily attaching the sensor to the motor power distribution component and temporarily attaching a connector connected to the sensor through a lead wire to a side surface facing an insertion direction of the terminal block to the opening;
inserting the connector to the opening along with the terminal block when the motor power distribution component is installed in the stator; and
installing the sensor in a motor by releasing the temporary attachment of the sensor.
